# EUROPEAN PATENT APPLICATION

(11) **EP 2 119 678 A1**
(43) Date of publication of application: **18.11.2009**
(21) Application number: 08165555.7
(22) Date of filing: 30.09.2008
(51) Int. Cl.: C02F 11/00, C02F 11/12, C02F 1/28

(54) **Method for elimination of mobile fraction of heavy metal ions in sewage sludge**

(30) Priority: 09.05.2008 PL 38513608
(71) Applicant: Politechnika Lubelska, 20-219 Lublin (PL)
(72) Inventor: Pawlowska, Malgorzata, 20-027, LUBLIN (PL); Pawlowska, Lucjan, 20-027, LUBLIN (PL)
(74) Representative: Kaminski, Piotr

(57) **Abstract**

The method for elimination of mobile fraction of heavy metal ions in sewage sludge is characterised in that the sewage sludge after the methane fermentation is mixed with natural milled zeolite in weight ratio of zeolite of 2-5% of contents of dry mass of fermented sewage sludge and the so obtained mixture is dried until the water content in the mixture is no higher than 20% by weight.

## Description

The present invention relates to a method for elimination of mobile fraction of heavy metal ions in sewage sludge.

Sewage sludge, depending on preparation and local conditions can be regarded either as waste or as a product that can be utilised in agriculture. Since it contains nitrogen and phosphorus compounds as well as humus producing matter, sewage sludge is valuable as a fertiliser and can be utilised for fertilization or recultivation of green lands.

Such sewage sludge should meet certain requirements: the contents of mobile heavy metal ions for use in natural environment should be as follows:

| Metal | Metal contents in mg per kg of dry mass |
|---|---|
| Pb | <1000 |
| Cd | <25 |
| Cr | <1000 |
| Cu | <1200 |
| Ni | <200 |
| Hg | <10 |
| Zn | <2500 |

In terms of bacteriology, the sewage sludge should not contain bacteria of *Salmonella* genus and the contents of eggs of digestive tract parasites should be lower than 300 pcs/kg dry mass.

Presently more and more frequently methane fermentation is employed and 1 kg of dry sludge yields production of 0,33 m³ of methane, contained in biogas in quantity of 60-70%. During fermentation also bacteria and parasites are eliminated. Fermentation does not eliminate however the contents of heavy metals, which could be present in sewage treatment plants, also those processing industrial waste. Sludge containing heavy metals is not suitable for use in nature because of the risk of polluting subterranean water with heavy metal ions.

The essence of the method for elimination of mobile fraction of heavy metal ions in sewage sludge is that the sewage sludge after the methane fermentation is mixed with natural milled zeolite in weight ratio of zeolite of 2-5% of the contents of dry mass of fermented sewage sludge and the so obtained mixture is dried until water content in the mixture is no higher then 20 % by weight.

Beneficial result of the method according to this invention is that it allows for elimination of pollution of subterranean water with heavy metal ions.

The method for elimination of mobile fraction of heavy metal ions in sewage sludge according to this invention involves mixing the sewage sludge after the methane fermentation with natural milled zeolite in weight ratio of zeolite of 2-5% of the contents of dry mass of fermented sewage sludge. Afterwards the so obtained mixture is dried until water content in the mixture is no higher then 20 % by weight.

## Claims

1. The method for elimination of mobile fraction of heavy metal ions in sewage sludge **characterised in that** the sewage sludge after the methane fermentation is mixed with natural milled zeolite in weight ratio of zeolite of 2-5% of contents of dry mass of fermented sewage sludge and the so obtained mixture is dried until the water content in the mixture is no higher then 20 % by weight.
